# EUROPÄISCHE PATENTSCHRIFT

(11) **EP 4 569 456 B1**
(45) Veröffentlichungstag und Bekanntmachung des Hinweises auf die Patenterteilung: **30.09.2026**
(21) Anmeldenummer: 23754801.1
(22) Anmeldetag: 11.08.2023
(51) Int. Cl.: G06Q 10/0633, G06Q 10/0833, G06Q 10/20, G06Q 10/08, G06K 19/06, B65G 1/137

(54) **INTRALOGISTIKSYSTEM ZUM ÜBERWACHEN VON ORTSSPEZIFISCHEN INTRALOGISTISCHEN AKTIONEN**
INTRALOGISTICS SYSTEM FOR MONITORING LOCATION-SPECIFIC INTRALOGISTICS ACTIONS
SYSTÈME INTRALOGISTIQUE POUR LA SURVEILLANCE D'ACTIONS INTRALOGISTIQUES SPÉCIFIQUES À UN LIEU DONNÉ

(30) Priorität: 12.08.2022 DE 102022120389
(43) Veröffentlichungstag der Anmeldung: 18.06.2025
(73) Patentinhaber: SSI Schäfer Automation GmbH (AT), 8051 Graz (AT)
(72) Erfinder: GRÖSSL, Christoph, 8010 Graz (AT)
(74) Vertreter: Witte, Weller & Partner Patentanwälte mbB
(86) Internationale Anmeldenummer: PCT/EP2023/072304
(87) Internationale Veröffentlichungsnummer: WO 2024/033528

(56) Entgegenhaltungen:
- EP-A1- 2 161 219
- EP-A1- 2 554 496
- DE-B4- 102018 112 012
- US-A1- 2014 139 654
- US-B1- 8 423 431

## Beschreibung

Die vorliegende Offenbarung betrifft allgemein das Gebiet der Intralogistik, und insbesondere ein Intralogistiksystem, das Wartungsvorgänge und eine Materialflusssteuerung überwachen kann. Eine Person wird dabei mittels Licht zu einem vorbestimmten Ort geführt, an dem ein (nur) maschinell lesbarer, ortspezifischer Code zur Verifizierung (durch eine übergeordnete einer dort durchzuführenden Aktion eingeblendet wird.

Eine Kommissionierführung mittels Licht für eine Navigation durch ein Lager und für ein Auffinden eines Entnahme- oder Ablageorts ist bekannt.

Das Dokument US 8,423,431 offenbart eine Kommissionieranlage, mit einer Vielzahl von ortsfest installierten Projektoren für eine visuelle Wegfindung (Navigation). Die Projektoren projizieren 2D-Symbole (z.B. einen Pfeil mit einem Kommissionierpersonennamen, Textbeschreibung des Wegs, etc.) entlang eines Wegs auf den Boden oder an die Wände der Anlage, um eine Kommissionierperson (räumlich) durch die Anlage zu einem Entnahme- oder Abgabeort zu führen. Am Entnahme- bzw. Abgabeort angekommen wird der Kommissionierperson dieser Ort selbst ausgeleuchtet und ggf. eine Information (z.B. Abbild des Artikels, Kontur des Artikels, Artikelname, etc.) über den zu handhabenden Gegenstand angezeigt. Die Kommissionierperson führt eine Kommunikationseinheit mit sich, die in drahtloser Verbindung mit einer übergeordneten Steuerung steht, um (z.B. mittels Triangulation) den aktuellen Ort der Kommissionierperson zu bestimmen. Basierend auf dieser so bestimmten Ortsinformation kann die Steuerung einen der Projektoren auswählen, um der Kommissionierperson eine geeignete Information zum Auffinden des Orts und/oder zum Identifizieren des zu handhabenden Gegenstands zu erleichtern. Ergänzend kann auch einer der (Orts-)Projektoren, wie z.B. ein Laserpointer, an einem Kommissionierwagen montiert sein, den die Kommissionierperson mit sich führt, während sie durch die Anlage läuft.

Um die Person effektiv zu führen (d.h. durch das System zu navigieren), ist es also erforderlich, die aktuelle Position der Person möglichst genau zu kennen. Deshalb führt die Person die Kommunikationseinheit mit sich, die permanent Positionsdaten an die Steuerung sendet, aus der die Position der Person periodisch mit einer hohen Rate berechnet wird. Dies ist arbeits- und ressourcenintensiv. Auf die ständig wiederkehrende Positionsbestimmung kann nicht verzichtet werden.

In dem Dokument DE 10 2018 203 175 A1 (vgl. dort Fig. 5 und 6) wird ein beweglicher Kommissionierwagen offenbart, der einen gestellfest montierten autostereoskopischen Projektor für eine Kommissionierführung (Entnahme und/oder Abgabe) umfasst. Der Projektor erzeugt ein (dreidimensional erscheinendes) Bild, wie z.B. von einem Pfeil, der einer Kommissionierperson einen Entnahme- oder Abgabeort anzeigt. Es wird also eine Pick-by-Light- bzw. Put-by-Light-Kommissionierführung offenbart. An dem angezeigten Ort ist einer von mehreren Lagerbehältern angeordnet, die in Regalgestellebenen unterhalb des Projektors angeordnet sind. Die Kommissionierperson bekommt einen Tiefeneindruck, indem sie ein stereoskopisch dargestelltes Symbol (z.B. eine Zahl für eine Entnahmemenge, den Pfeil für den Ort, ein Artikelfoto, einen Artikelnamen oder eine Artikelkontur) an dem Ort sieht, wo der entsprechende Behälter angeordnet ist. Bei einer stereoskopischen Darstellung werden zwei Bilder (jeweils eins für das linke und rechte Auge) erzeugt, die im Gehirn eines Betrachters für eine Tiefenwahrnehmung kombiniert werden.

Das Dokument EP 2 554 496 A1 offenbart wiederum eine visuelle Navigationsführung in einer Kommissionieranlage (Regallager). Die Kommissionierperson wird mit einem Laserprojektor durch das Lager bis zu einem Regalfach geführt, indem entsprechende Navigationsinformationen (z.B. Pfeile oder Text) auf den Boden projiziert werden. Der Laserprojektor ist beweglich an einer Decke des Lagers gelagert.

Das Dokument DE 10 2016 005 691 A1 offenbart ebenfalls eine Kommissionierführung mittels einer ortsfesten Projektionseinheit, die Regalfächer eines Lagerregals zum Auffinden eines Entnahmeorts beleuchtet. Die Projektionseinheit ist in der Lage, mehrere der Regalfächer gleichzeitig visuell zu markieren. Die von der Projektionseinheit darstellbare Bildinformation umfasst: grafische Inhalte, verschiedene Farben, Zahlen, Buchstaben, Laufschriften, Muster und/oder Bilder. Die Information kann blinkend dargestellt werden. Die Regalfächer können mit einer Index-Projektion (Rahmen um das Fach herum oder Blinkeffekt) hervorgehoben werden. Eine Entnahmebestätigung erfolgt über ein mobiles drahtloses Bestätigungsgerät oder über eine Gestenerkennung. Das Bestätigungsgerät weist eine Taste auf, die nach einer Entnahme betätigt wird, um einer Steuerung die Entnahme zu signalisieren. Dieses Signal kann auch Positionsdaten des mobilen Geräts enthalten, damit die Steuerung weiß, welche der Regalfachprojektionen abgeschaltet werden kann, weil die Entnahme am entsprechenden Regalfach erfolgt ist.

Das Dokument EP 2 161 219 A1 betrifft gemäß seiner Zusammenfassung ein Verfahren zur visuellen technischen Unterstützung von manuellen Kommissioniervorgängen durch eine Vorrichtung mit zumindest einer mobilen Einheit. Die Einheit weist eine optosensorische Erfassungseinrichtung, eine optische Anzeigevorrichtung, eine Datenverarbeitungseinrichtung und eine Datenschnittstelle zur kabellosen Verbindung mit einer stationären EDV-Anlage auf, die neben Warenmanagement-Software eine Verbindungseinrichtung für alle aktiven mobilen Einheiten aufweist. Es ist vorgesehen, dass jede mobile Einheit zyklisch Navigationsinformationen empfängt, welche in Form von Wegweisern, insbesondere Pfeilen, über die optische Anzeigevorrichtung ausgegeben werden, wobei Daten zur spezifischen Navigation aufgrund eines Datenvergleiches der Daten aus der jeweiligen optosensorischen Erfassungseinrichtung mit Referenz- oder Modelldaten eines Lagers in der EDV-Anlage oder der mobilen Einheit einerseits und der von der EDV-Anlage an die mobile Einheit übermittelten Lage-Position eines aktuellen Zielobjektes einer zugeordneten wegoptimierten Warenliste andererseits zyklisch ermittelt und adressiert an die zugeordnete mobile Einheit gesendet werden und wobei die neue Navigationsinformation für das nächste Objekt der Warenliste erst nach der optischen Erfassung des aktuellen Zielobjektes oder eines Platzhalter-Ersatzobjektes durch die Erfassungsvorrichtung und eindeutiger Identifizierung desselben durch die EDV-Anlage sowie eindeutige Erfassung und Protokollierung des Kommissioniervorgangs eines Waren-Objektes vom Lagerplatz in den Zielplatz erfolgt. Der Weiteren wird eine Vorrichtung zur Durchführung dieses Verfahrens beschrieben.

Weiterer Stand der Technik findet sich in den Dokumenten DE 10 2018 112 012 B4, US 8 423 431 B1 und US 2014/139654 A1.

Ein weiteres Problemfeld betrifft die Wartung von Komponenten einer Intralogistikanlage.

Wartungsaufträge werden von Wartungstechnikern ausgeführt, die zu den zu wartenden Komponenten laufen sollen, um die Komponenten zu inspizieren und ggf. auszutauschen. Der Techniker bekommt eine Liste, die alle zu wartenden Komponenten enthält, entweder in ausgedruckter Form oder als Datei. Es wird erwartet, dass der Techniker zu den Komponenten hinläuft, deren Kennung scannt und die Inspektion durchführt. In der Praxis hat sich herausgestellt, dass sich Techniker die Komponenten-Kennungen vorab als Kopien besorgen und zum Zeitpunkt der eigentlichen Wartung, nur die Kennungskopie scannen, ohne die Komponente tatsächlich zu inspizieren. Die Techniker sparen sich so den Weg zu den Komponenten und sind auch viel schneller fertig, weil die Wartung gar nicht wirklich durchgeführt wird. Dennoch muss ein Systembetreiber die angeblich vorgenommene Wartung bezahlen. Außerdem leidet die Zuverlässigkeit des Systems, weil die Wartung ja gar nicht durchgeführt wurde. Es wäre wünschenswert, ein System zu schaffen, das einen derartigen Arbeitsumgehung bzw. -vermeidung verhindert und das dafür sorgt, dass der Techniker die Wartung nur am Ort der zu wartenden Komponente durchführen kann.

Noch ein weiteres Problemfeld betrifft das Tracking des Materialflusses, wie es unten noch näher ausgeführt werden wird.

Es ist deshalb eine Aufgabe der vorliegenden Offenbarung, ein verbessertes Intralogistiksystem zu schaffen.

Diese Aufgabe wird durch ein Intralogistiksystem nach Anspruch 1 zum Überwachen einer vorbestimmten ortsspezifischen Aktion gelöst.

Der ortsspezifische Code wird an einen spezifischen Ort projiziert, der mit der durchzuführenden Aktion eindeutig verknüpft ist. Dieser Code kann also nur an dem relevanten Ort gelesen werden. Dies setzt voraus, dass sich das Lesegerät an diesem Ort befindet. Der Code kann nicht vorab ausgedruckt werden und an einem anderen Ort eingelesen werden.

Die Steuerung erhält durch das Einlesen des ortsspezifischen Codes eine direkte Rückkopplung mit der Information, dass sich das Lesegerät an dem gewünschten Ort befindet. Der von dem Lesegerät gelesene Code ist Teil des Bestätigungssignals oder entspricht sogar dem Bestätigungssignal. Basierend auf diesem Signal kann die Steuerung verifizieren, ob der richtige Code (z.B. von der richtigen Entität) gelesen wurde. Es kann verifiziert werden, ob das richtige Lesegerät den richtigen Code eingelesen hat. Außerdem kann verifiziert werden, ob der Code zum richtigen Zeitpunkt eingelesen wurde.

Vorzugsweise ist die Steuerung eingerichtet, immer nur einen der Codes zur gleichen Zeit zu projizieren.

Auf diese Weise ist sichergestellt, dass im Fall, wenn mehrere Aktionen durchzuführen sind, eine gewünschte Reihenfolge bei der Durchführung der Aktionen eingehalten wird.

Alternativ kann die Steuerung eingerichtet sein, mehrere der Codes gleichzeitig an die entsprechenden Orte zu projizieren.

In diesem Fall kann eine Person oder eine Maschine selbst entscheiden, und damit eine Durchführungsreihenfolge festlegen, welche der Aktionen zuerst und welche der Aktionen zuletzt durchgeführt wird.

Dabei ist es von Vorteil, wenn das Bestätigungssignal ferner aufweist: eine komponentenspezifische Kennung; eine entitätenspezifische Kennung; und/oder eine lesegerätspezifische Kennung.

Die spezifischen Kennungen enthalten zusätzliche Informationen, die bei der Überprüfung der korrekten Durchführung der Aktion zu Vergleichszwecken verwendet werden können.

Vorzugsweise wird der eine Code (direkt) an den Ort projiziert, der mit der zugehörigen Aktion verknüpft ist.

Die Projektion gibt also den Ort an, wo die Aktion durchzuführen ist. Dies ist insbesondere im Falle von Wartungen von Vorteil, weil der Wartungstechniker mittels Licht zu einer zu wartenden Komponente geführt wird und diese inspizieren kann. Die Projektion assistiert dem Techniker bei der Navigation durch das System und bei der Identifikation der zu wartenden Komponente. Schließlich ist der Code für eine Rückkopplung zur Steuerung zu Verifikationszwecken nutzbar.

Insbesondere ist der Projektor hochauflösend, um den einen Code aus einer Entfernung von mindestens 3 m, 4 m, 5 m oder aus einer Entfernung von mehr als 5 m an den einen Ort zu projizieren.

Der Projektor hat also eine große Abdeckung. Dies bedeutet, dass der (lenkbare) Projektor viele verschiedene Orte beleuchten kann, ohne bewegt zu werden. In einer besonders vorteilhaften Ausgestaltung wird der Projektor ortsfest montiert und muss deshalb nicht beweglich ausgestaltet sein, wodurch die Kosten gesenkt werden können. Auch der Steuerungsaufwand reduziert sich, weil der Projektor nicht bewegt werden muss. Dennoch ist der Projektor aufgrund seiner Hochauflösung in der Lage, den ortsspezifischen Code mit einer ausreichenden Auflösung trotz der großen Entfernung zum Projektionsort darzustellen. Dies gilt insbesondere, wenn der Code maschinell lesbar sein muss und eine hohe Informationsdichte hat.

Vorzugsweise weist das Intralogistiksystem eine Datenstruktur auf, die eine oder mehrere der Aktionen definiert und die für jede der definierten Aktionen einen einzigen der ortsspezifischen Codes umfasst, der eine Koordinate im Intralogistiksystem eindeutig beschreibt, an welche der eine Code durch den Projektor zu projizieren ist.

Die Datenstruktur stellt die Basis für einen Datenvergleich dar, der im Rahmen der Verifikation durchgeführt werden kann. Die Datenstruktur ermöglicht ein einfaches Vergleichen von Informationen, deren Übereinstimmung man erwartet.

Insbesondere umfasst die Datenstruktur für jede der Aktionen ferner einen Auftragstypen, eine der Entitäten, eine Systemkomponente und/oder eine Zeitangabe.

Ferner können die Codes, vorzugsweise ausschließlich, maschinell durch das Lesegerät lesbar sein und durch die Steuerung ausgewertet werden.

Eine Kommissionierperson kann den Code also nicht selbst auswerten, was die Korruptionsanfälligkeit verringert.

Weiter ist es von Vorteil, wenn die Codes eindimensional oder zweidimensional ausgestaltet sind, um eine Ortskoordinate eindeutig in Form eines Musters abzubilden.

Der Code ist für einen Techniker nicht lesbar, was die Möglichkeiten verringert, das System auszutricksen. Aber der Code ist maschinell lesbar und kann eine hohe Informationsdichte aufweisen.

Weiter ist es wünschenswert, dass die Verifikation im Fall der Wartung erfolgt, indem ferner, durch das Lesegerät, eine Systemkomponentenkennung gelesen und gesendet und, durch die Steuerung, geprüft wird; und/oder indem durch die Steuerung geprüft wird, ob die Systemkomponente, die ebenfalls mit dem Auftrag verknüpft ist, während einer vorbestimmten Zeitdauer offline geht, nachdem der eine Code gelesen wurde.

Vorzugsweise erfolgt die Verifikation im Falle der Materialflusssteuerung, indem das Lesegerät, das an einem Fahrzeug, das die bewegliche Entität ist, angebracht ist, den einen Code an einem Wegpunkt liest, den das Fahrzeug gemäß einer vorab geplanten Materialflusssteuerung passieren muss und auf den (oder in dessen unmittelbare Nähe) der eine Code projiziert wird, das Bestätigungssignal ferner eine fahrzeugspezifische Kennung, und vorzugsweise einen Zeitstempel entsprechend der Lesung des einen Codes, aufweist, und die Steuerung die vorab geplante Materialflusssteuerung durch einen Vergleich gegen Daten prüft, die aus einer Auswertung des Bestätigungssignals resultieren.

Insbesondere umfasst die Verifikation durch die Steuerung eine Überprüfung, dass der empfangene gelesene Code mit dem Code übereinstimmt, der der entsprechenden Aktion zugeordnet ist; und dass die Steuerung, wenn die Codes übereinstimmen, ein weiteres Bestätigungssignal an die entsprechende bewegliche Systementität ausgibt und veranlasst, dass diese Systementität ihre aktuelle Aktion fortsetzt, oder die Steuerung, wenn die Codes nicht überstimmen, ein Korrektursignal an die entsprechende bewegliche Entität ausgibt und veranlasst, dass diese Systementität anstatt ihrer aktuellen Aktion die vorbestimmte Aktion durchführt.

Für eine effektive Materialflusssteuerung ist es wichtig, dass ein vorab geplanter Materialfluss in der Realität so gut wie möglich umgesetzt wird, weil jeder Fehler zu Verzögerungen führt. Deshalb wird eine Vielzahl von stationären Scannern eingesetzt, die die Materialflussgüter immer wieder lesen, um diese Echtzeitdaten mit den geplanten Daten zu vergleichen (und abzugleichen), um ggf. korrigierend einzugreifen. Stationäre Scanner sind teuer, wartungsanfällig und müssen in Betrieb genommen werden. Es ist deshalb wünschenswert, ein System zu schaffen, bei dem die Anzahl der Scanner reduziert bzw. die Scanner ganz abgeschafft werden können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen. Ausführungsbeispiele der Offenbarung sind in den Zeichnungen dargestellt und werden in der nachfolgenden Beschreibung näher erläutert.
Fig. 1 zeigt ein Blockdiagramm eines Intralogistiksystems
Fig. 2 zeigt einen exemplarischen 1D-Code (Fig. 2A) und einen exemplarischen 2D-Code (Fig. 2B).
Fig. 3 veranschaulicht einen DLP-Projektor, der in einen Autoscheinwerfer integriert ist.
Fig. 4 zeigt eine Datenstruktur exemplarisch in tabellarische Form.
Fig.5 zeigt ein Blockdiagramm eines Lesegeräts.
Fig. 6 veranschaulicht eine Wartungssituation.

Die vorliegende Offenbarung betrifft allgemein das Gebiet der Intralogistik, und insbesondere eine (automatisierte) Überwachung von Wartungsarbeiten sowie ein Tracking eines z.B. durch fahrerlose Transportfahrzeuge (FTF) durchgeführten Materialflusses in einem Intralogistiksystem (Lager- und/oder Kommissioniersystem, z.B. in der Produktionslogistik oder in der Warendistributionslogistik).

Der Begriff "Intralogistik" umfasst die Organisation, Steuerung, Durchführung und Optimierung eines innerbetrieblichen Materialflusses, von Informationsströmen sowie eines Warenumschlags in der Industrie und im Handel. Unter dem Begriff "Materialfluss" versteht man alle Vorgänge und deren Verkettung bei der Herstellung, bei der Be- und Verarbeitung sowie bei der Verteilung von Gütern und Gegenständen innerhalb bestimmter festgelegter Bereiche (z.B. Wareneingang, Lager, Kommissionierung und/oder Warenausgang). Der Materialfluss wird von einem Materialflussrechner (MFR) gesteuert, der Quelle-Ziel-Beziehungen kontrolliert und eine Reihenfolge koordiniert, in welcher einzelne Aufträge (Transportaufträge) abgearbeitet werden.

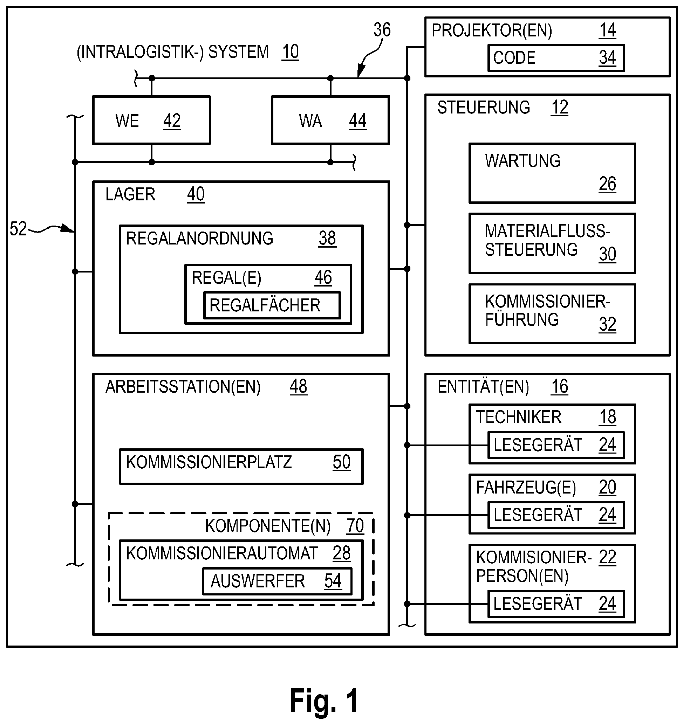

Die Fig. 1 zeigt ein Blockdiagramm eines Intralogistiksystems 10, das nachfolgend kurz auch nur als System 10 bezeichnet werden wird und das exemplarisch ein Lager- und Kommissioniersystem sein kann. Das System 10 ist üblicherweise in einem Gebäude (z.B. in einer Halle) untergebracht.

Das System 10 umfasst eine (übergeordnete) Steuerung 12, mindestens einen Projektor 14 und mindestens eine bewegliche (System-)Entität 16, wie z.B. einen (Wartungs-)Techniker 18, ein (fahrerloses Transport-)Fahrzeug 20 und/oder eine Kommissionierperson 22, von denen jede Entität 16 ein Lesegerät 24 mit sich führt.

Der Techniker 18 kann z.B. ein Smartphone als das Lesegerät 24 mit sich führen.

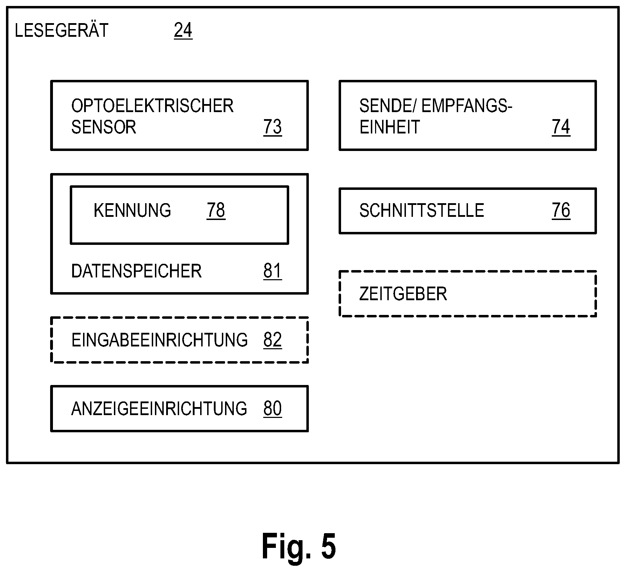

Das Lesegerät 24 kann in das Fahrzeug 20 integriert sein, wobei sich das Lesegerät 24 und das Fahrzeug 20 gemeinsam benötigte Funktionseinheiten, wie z.B. eine Sende-/Empfangseinheit 74 und/oder einen Datenspeicher 81 (vgl. Fig. 5), teilen können.

Die Steuerung 12 der Fig. 1 kann zentral oder dezentral verteilt vorgesehen sein. Die Steuerung 12 umfasst eine Datenverarbeitungsanlage (nicht dargestellt) inklusive einem oder mehrerer Prozessoren (nicht dargestellt) und einem oder mehrerer Datenspeicher (nicht dargestellt), wo ein oder mehrere Programme hinterlegt sind, die von den Prozessoren ausgeführt werden, um Funktionen des System 10 zu implementieren.

Exemplarische Funktionen der Steuerung 12 sind: eine Durchführung und Überwachung einer Wartung 26 einer Systemkomponente 70 (z.B. eines Kommissionierautomaten 28 oder eines der Fahrzeuge 20), ein Tracking eines Materialflusses 30 und/oder die Durchführung einer Kommissionierführung 32 (z.B. Entnahme mit Pick-by-Light (PbL) oder Abgabe mit Put-to-Light (PtL)). Unter einem "Tracking" ist eine Verfolgung von bewegten Objekten (Artikel, Ladungsträger, Fahrzeuge 20, etc.) in Echtzeit zu verstehen. Basierend auf Tracking-Daten kann verifiziert werden, ob der vorab festgelegte Materialfluss 30 gemäß seiner Planung ausgeführt wird bzw. abläuft.

Jeder der Projektoren 14 ist eingerichtet, einen ortsspezifischen Code 34, z.B. auf einen Boden, an eine Wand oder auf eine der Systemkomponenten, zu projizieren. Ortsspezifisch bedeutet, dass der Code 34 eine eindeutige Information über seinen jeweiligen Projektionsort enthält.

Die Projektion wird durch die Steuerung 12 veranlasst, die entsprechenden Steuersignale (nicht dargestellt) über ein (drahtloses und/oder leitungsgebundenes) Kommunikationsnetzwerk 36 (z.B. ein Bussystem, WiFi-Netz und/oder 5G-Netz) an den oder die Projektoren 14 zu übertragen. Jeder der Projektoren 14 ist eingerichtet, Projektionen in Form von sichtbarem Licht an mehreren unterschiedlichen (Projektions-)Orten innerhalb des Systems 10 zu erzeugen, auch tagsüber. Die Projektionen können gleichzeitig oder sequenziell hintereinander von jedem der Projektoren 14 erzeugt werden.

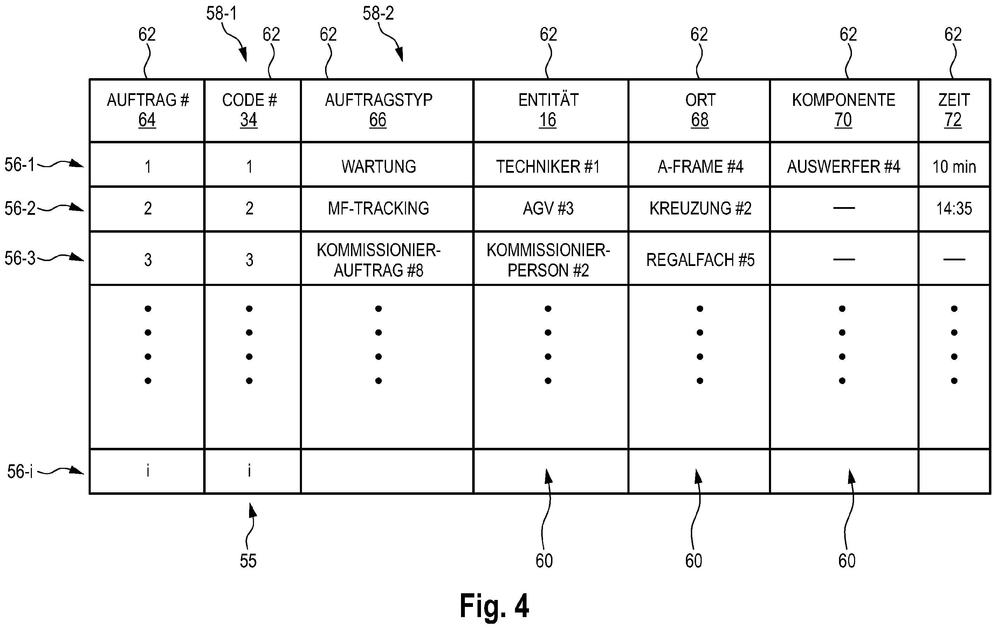

Die Projektoren 14 sind vorzugsweise ortsfest (z.B. an einer Hallendecke) installiert, können aber auch (z.B. über ein Schienen-Schlitten-System) beweglich ausgebildet sein, um mit wenigen oder sogar nur einem einzigen Projektor 14 große Bereiche des Systems 10 bzw. das gesamte System 10 abzudecken. Die Projektoren 14 decken grundsätzlich größere (Funktions-)Bereiche (z.B. eine Regalanordnung 38 in einem Lager 40) des Systems 10 ab, damit jeder der Projektoren 14 ortspezifische Codes 34 an viele verschiedene Orte 68 (vgl. Fig. 4), insbesondere gleichzeitig, projizieren kann. Um eine große Abdeckung zu erzielen, sollten die Abstände zwischen den Projektoren 14 und den (frei wählbaren) Projektionsflächen groß gewählt werden, was ein ausreichend großes Auflösungsvermögen der Projektoren 14 voraussetzt, insbesondere weil die ortsspezifischen Codes 34 maschinell lesbar sein müssen.

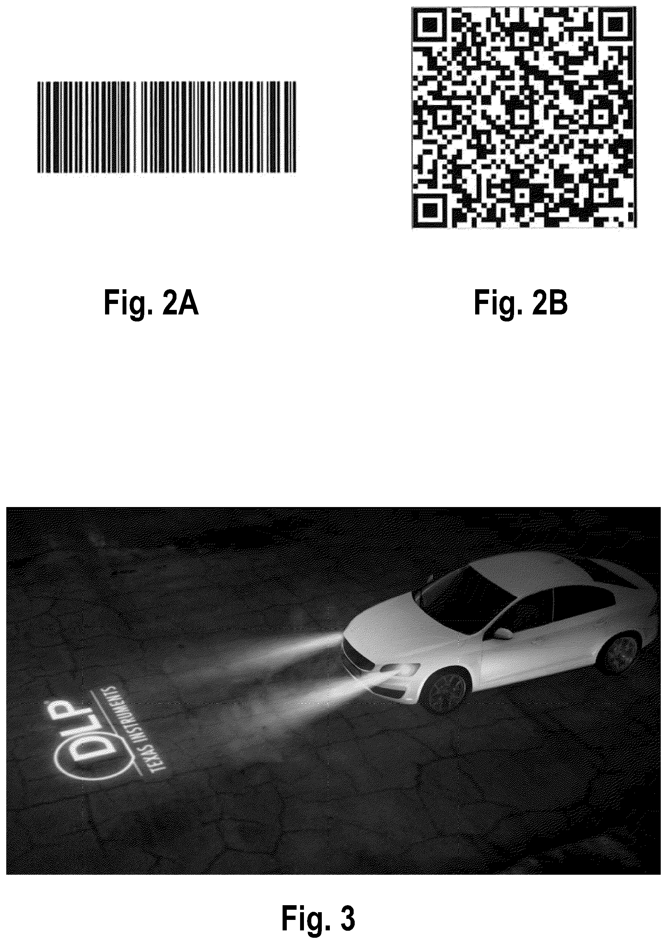

Jeder der Codes 34 kann ein eindimensionaler Code 34 (1D-Code, z.B. ein Strichcode, vgl. Fig. 2A) oder ein zweidimensionaler Code 34 (2D-Code, z.B. ein QR-Code, vgl. Fig. 2B) sein. Der Code 34 ist, vorzugsweise ausschließlich, durch die Lesegeräte 24 maschinell lesbar und durch die Steuerung 12 elektronisch auswertbar. Der Code 34 ist ortsspezifisch, d.h. jeder der Codes 34 ist einem (einzigen) Ort innerhalb des Systems 10 eindeutig zugeordnet. Dies bedeutet mit anderen Worten, dass jeder Ort im System 10 mit einem anderen Code 34 ausleuchtbar ist. Die Ortsinformation ist im Code 34 enthalten.

Die Projektoren 14 können deshalb mit einem Lenk- und Autofokussiersystem (nicht dargestellt) ausgerüstet sein, um die Codes 34 auch aus größeren Entfernungen, z.B. mehr als 3m, 4m, 5m oder mehr maschinell (aus-)lesbar an den gewünschten Ort zu projizieren.

Für die vorliegenden Anwendungen geeignete Projektoren 14 sind z.B. "DLP"-Projektoren der Firma "Texas Instruments", die z.B. unter der Produktbezeichnung "DLP5531" angeboten werden. Fig. 3 veranschaulicht ein Beispiel, bei dem ein DLP-Projektor in einen Autoscheinwerfer integriert ist, um für einen Fahrer Informationen in Textform auf die Fahrbahn zu projizieren.

Die 1D- und 2D-Codes 34 der Fig. 2 stellen optoelektronisch lesbare Informationen dar, die aus verschieden breiten Strichen und/oder Punkten und dazwischen liegenden Lücken mit möglichst hohem Kontrast bestehen. Der Begriff Optoelektronik umfasst im weitesten Sinne alle Produkte und Verfahren, die die Umwandlung von elektronisch erzeugten Daten und Energien in Lichtemission ermöglichen und umgekehrt. Im Gegensatz zu den 1D-Codes 34 sind die Daten im 2D-Code 34 nicht nur in einer Richtung codiert, sondern in Form einer Fläche über zwei Dimensionen. Der 2D-Vorteil ist eine höhere Dichte an Nutzinformation. Der Begriff "Code" steht in der vorliegenden Offenbarung nicht für eine Verschlüsselungsart, sondern für Abbildungen von Daten in Form von Symbolen. Die Daten im Code 34 werden mit den Lesegeräten 24, wie z.B. Kamera-Scannern, maschinell eingelesen.

Das System 10 kann ferner (optional) umfassen: einen Wareneingang (WE) 42; einen Warenausgang (WA) 44; das Lager 40 mit der aus einem oder mehreren Regalen 46 bestehenden Regalanordnung 38; eine oder mehrere Arbeitsstationen 48, wie z.B. einen Kommissionierplatz 50, einen Packplatz, etc.; und/oder ein Fördersystem 52. Dies sind Funktionsbereiche und Funktionskomponenten des System 10.

Unter dem Fördersystem 52 sind allgemein technische Systeme zur Implementierung des Materialflusses 30, d.h. Fördereinrichtung(en), zu verstehen, die im Wesentlichen innerbetriebliche Ortsveränderungen, d.h. einen Transport, von (Förder-) Gütern bewirken. Die Fördereinrichtungen umfassen zwei Gruppen (nicht dargestellt): Stetigförderer und Unstetigförderer. Stetigförderer (z.B. Rollenförderer, Bandförderer, Kettenförderer, Hängeförderer, etc.) arbeiten kontinuierlich und sind zumeist ortsfest installiert. Unstetigförderer, wie z.B. die Fahrzeuge 20 (fahrende Roboter, fliegende Drohnen, etc.), fördern und transportieren das Fördergut entweder frei, d.h. autonom bzw. selbstständig, oder spur- bzw. zwangsgeführt entlang von Förderstrecken (Weg zwischen einer Quelle und einem Ziel). Die Fördereinrichtungen verbinden den WE 42, den WA 44, das Lager 40 und/oder die Arbeitsstationen 48 materialflusstechnisch miteinander. Die Materialflusssteuerung sorgt dafür, dass die Güter gemäß Transportaufträgen, die durch Kommissionieraufträge verursacht sein können, entlang des Fördersystems 52 transportiert werden.

Unter dem Begriff Navigation wird nachfolgend in Anlehnung an die DIN 13312:2005-02 eine Wegfindung (Routing) durch einen Fahrkurs sowie eine Positionsbestimmung innerhalb des Fahrkurses verstanden. Ein Weg bzw. eine Route von einem beliebigen Startpunkt zu einem beliebigen Zielpunkt im Fahrkurs wird von der Steuerung 12 im Rahmen des Materialflusses 30 vorab festgelegt. Eine Überprüfung, ob der geplante Weg auch tatsächlich genommen wird, erfolgt im Rahmen des Trackings unter Verwendung der ortspezifischen Codes 34, wie es nachfolgend noch näher erläutert werden wird.

Der ortsspezifische Code 34 wird auch für Wartungszwecke eingesetzt, insbesondere um sicherzustellen, dass der Techniker 18 auch tatsächlich zu einer Systemkomponente 70 läuft und diese wartet. Jede Komponente 70 des Systems 10 muss im Laufe der (Betriebs-)Zeit gewartet werden. Exemplarische Systemkomponenten 70 sind die Fahrzeuge 20 oder die Kommissionierautomaten 28. Bei der Wartung kann die Systemkomponente z.B. kontrolliert, geschmiert, nachjustiert oder Ähnliches werden. Die Wartung kann eine Reparatur, einen Bauteilaustausch, einen Umbau, eine Inbetriebnahme, eine Neuinstallation (z.B. korrekter Einbau und Positionierung) und Ähnliches umfassen.

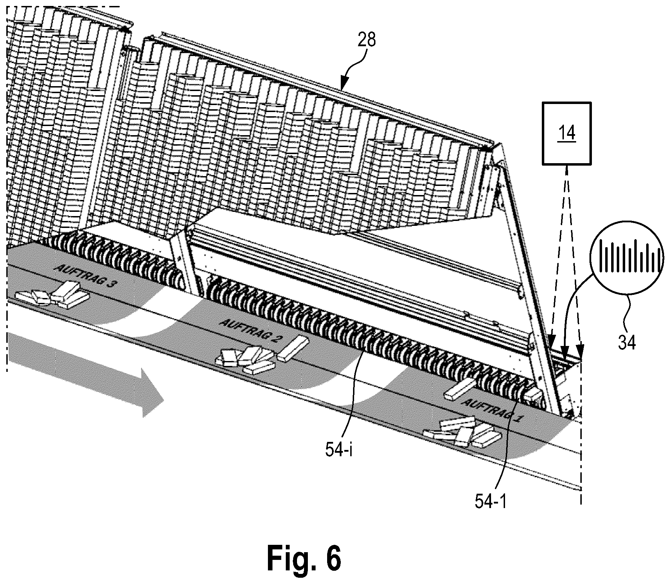

Nachfolgend wird exemplarisch ein Kommissionierautomat 28 betrachtet, der eine Vielzahl von (Produkt-)Auswerfern 54, die wiederum Komponenten 70 darstellen, aufweist, um im Automaten 28 gespeicherte Produkte automatisiert gemäß einem Kommissionierauftrag zu vereinzeln, siehe auch Fig. 6. Einer oder alle der Auswerfer 54 sind zu warten. Diese Auswerfer 54 stellen in diesem Fall exemplarisch die zu wartenden Systemkomponenten 70 dar. Es versteht sich, dass auch der Automat 28 selbst die zu wartende Komponente 70 sein könnte. Ferner versteht es sich, dass die zu wartende Komponente jeder Gegenstand innerhalb des Systems 10 sein kann, selbst eine Software, die in einem Gerät des Systems 10 installiert ist.

Die Steuerung 12 weist ferner eine Datenstruktur 55 auf, die schematisch im Blockdiagramm der Fig. 4 gezeigt ist. Fig. 4 zeigt exemplarisch eine tabellarische Darstellung der Datenstruktur 55, die aus Zeilen 56 (56-1, 56-2, ..., 56-i) und Spalten 58 (58-1, 58-2, ..., 58-j), jeweils aus Datenfeldern 60, besteht. Eine Zeile 56 der Datenstruktur 55 kann aus einem oder mehreren Datenfeldern 60 aus unterschiedlichen Datenfeldtypen 62 bestehen. Jede der Zeilen 56 repräsentiert eine Aktion, die innerhalb des Systems 10 durchzuführen ist, wie z.B. die komponentenspezifische Wartung 26, das Tracking der Materialflusssteuerung 30 oder ggf. auch die Kommissionierführung 32. Jede der Zeilen 56 repräsentiert ferner einen Auftrag, in welchen die Aktion von der Steuerung 12 gewandelt wird. Die Datenstruktur 55 der Fig. 4 stellt also mehrere Aktionen bzw. Aufträge dar.

Die Aufträge können nacheinander oder gleichzeitig abgearbeitet werden. Die ortsspezifischen Codes 34 werden entsprechend nacheinander oder gleichzeitig an entsprechende Orte 68 projiziert.

Mögliche Datenfeldtypen 62 der Datenstruktur 55 sind: eine Auftragsnummer 64, eine Codenummer bzw. der Code 34, ein Auftragstyp 66, die Systementität 16, ein Ort (d.h. eine Koordinate) 68 innerhalb des Systems 10, eine Systemkomponente 70 und/oder eine Zeitangabe 72. Die Zeitangabe 72 kann eine Information darüber enthalten, wann der zugehörige Code 34 und/oder wie lange der zugehörige Code 34 zu projizieren ist. Das Entitätsdatenfeld kann eine Information über die zugehörige Entität 16, wie z.B. eine individuelle Entitäten-Kennung 78, ein zur Entität 16 gehöriges Lesegerät 24 bzw. dessen Lesegerät-Kennung 78 und Ähnliches enthalten, wie es unten noch näher erläutert werden wird.

Nachfolgend wird die erste Zeile 56-1 näher betrachtet, die exemplarisch eine (steuerungsinitiierte) Wartungsaktion betrifft. Die Steuerung 12 erzeugt den entsprechenden Wartungsauftrag ("Auftrag #1). Die Erzeugung kann alterativ (manuell) durch einen Betreiber des Systems 10 veranlasst werden. Bei der automatischen Erzeugung kann die Steuerung 12 z.B. auf eine Datenbasis (nicht dargestellt) zurückgreifen, wo eine tatsächliche Nutzungsdauer, Inspektionsintervalle, eine durchschnittliche Lebensdauer, etc. einer Komponente 70 hinterlegt sind. Nähert sich die tatsächliche Nutzungsdauer der durchschnittlichen Lebensdauer kann die Steuerung 12 dies erkennen und automatisch den entsprechenden Wartungsauftrag erzeugen.

Die erste Zeile 56-1 steht für diesen ersten Auftrag #1, dessen korrekte Durchführung durch die Steuerung 12 sicherzustellen ist. Beim (Wartungs-)Auftrag #1 soll z.B. der vierte Auswerfer 54 des vierten Kommissionierautomaten 28 gewartet (z.B. inspiziert, ggf. inkl. einem Komponentenaustausch) werden, was von einem ersten Techniker 18 ("Techniker #1") auszuführen ist. Für diese Wartung benötigt ein (beliebiger) Techniker 18 erfahrungsgemäß durchschnittlich 10 min, vgl. die zugehörige Zeitangabe ("10 min"). In den Daten des Orts 68 sind die (Orts-)Koordinaten des vierten Kommissionierautomaten 28 (in Bezug auf das System 10) hinterlegt. In den Daten der Komponente 70 können auch (Orts-) Koordinaten (z.B. in Bezug auf den vierten Kommissionierautomaten 28) hinterlegt sein. Diese Koordinaten kann die Steuerung 12 nutzen, um erstens einen geeigneten Projektor 14 auszuwählen, der ein Gesichtsfeld hat, in welchem die zu wartende Komponente 70 angeordnet ist. Die Steuerung 12 kann diese Koordinaten zweitens nutzen, um den entsprechenden Projektor 14 zu veranlassen, den zugehörigen ortsspezifischen Code 34 in einer (unmittelbaren) Nähe zu der zu wartenden Komponente 70 zu projizieren. Aus dem Ort der Projektion muss eindeutig klar sein, welche der Komponenten 70 zu warten ist, weil der Code 34 für den Techniker 18 selbst nicht lesbar ist.

Dem Techniker 18 wird also durch die Projektion der Ort 68 der Komponente 70 als auch die zu wartende Komponente 70 selbst visualisiert. Dies erleichtert dem Techniker 18 die Navigation durch das System 10 und das Auffinden und Identifizieren der zu wartenden Komponente 70. Diese Situation ist in Fig. 6 veranschaulicht, wo ein Code 34 für einen ersten Auswerfer 54-1 unmittelbar vor dem ersten Auswerfer 54-1 eines Kommissionierautomaten 28 (hier: A-Frame) auf eine eindeutig zuordenbare Weise projiziert wird.

Sobald der Techniker 18 am Ort 68 der zu wartenden Komponente 70 angekommen ist, wird der projizierte Code 34 mit einem optoelektrischen Sensor 73 des Lesegeräts 24 gelesen, das der Techniker 18 mit sich führt. Das Lesegerät 24, vgl. Fig. 5, erzeugt ein dem gelesenen Code 34 entsprechendes Signal und sendet dieses Signal mittels einer Sende- und Empfangseinheit 74 über eine (Daten-) Schnittstelle 76 als Bestätigung (Bestätigungssignal) an die Steuerung 12. Dieses Signal kann eine individuelle Lesegerät-Kennung 78 und/ oder eine individuelle Techniker-Kennung 78 enthalten, die im Lesegerät 24 in einem Datenspeicher 81 hinterlegt ist bzw. sind und die (auch) in dem Datenfeld 60 der Entität 16 zu Vergleichszwecken hinterlegt sein können. Dieses Signal kann auch einen Zeitstempel (nicht dargestellt) enthalten, der angibt, wann der entsprechende Code 34 gelesen wurde.

Die Steuerung 12 empfängt das Signal vom Lesegerät 24. Der Empfang des Signals bestätigt der Steuerung 12, dass der Techniker 18 bei der zu wartenden Komponente 70 angekommen ist. Das Signal wird durch die Steuerung 12 elektronisch ausgewertet, um die (korrekte) Durchführung der steuerungsinitiierten Aktion (hier: Wartungsauftrag) basierend auf den Daten zum Auftrag # 1 und den Daten aus dem empfangenen Bestätigungssignal zu verifizieren. Basierend auf diesen Informationen kann die Steuerung 12 durch einen Vergleich sicherstellen, dass sich der richtige Techniker 18 bei der richtigen, zu wartenden Komponente 70 aufhält.

Die Verifikation erfolgt im Fall der Wartung, beispielsweise: indem durch das Lesegerät 24 eine (komponentenspezifische) Systemkomponenten-Kennung, die in Form eines weiteren Codes an der Komponente 70 angebracht ist, mit dem Lesegerät 24 gelesen und an die Steuerung 12 gesendet wird und diese gelesene Kennung 78 von der Steuerung 12 gegen die im Auftrag #1 im Datenfeld 60 der Komponente 70 hinterlegte Komponenten-Kennung 78 auf Übereinstimmung geprüft wird; und/oder indem durch die Steuerung 12 geprüft wird, ob die Systemkomponente 70, die mit dem Auftrag #1 verknüpft ist, während einer vorbestimmten Zeitdauer offline geht, nachdem der zugehörige Code 34 gelesen wurde. Üblicherweise baut der Techniker 18 die Komponente 70 aus, muss die Komponente also von einer Stromversorgung trennen, so dass die Komponente offline geht. Diese Trennung kann von der Steuerung 12 zu Verifikationszwecken überwacht werden.

Im Fall von Diskrepanzen kann die Steuerung 12 die entsprechende Entität 16, hier also den Techniker #1, kontaktieren und korrigierende Hinweise übermitteln, die dem Techniker #1 z.B. visuell (Anzeigeeinrichtung 80 in Fig. 5) oder hörbar (gesprochener Text) mitgeteilt werden. Die Steuerung 12 kann z.B. veranlassen, dass dem Techniker 18 eine korrigierende Information z.B. in dem Fall, dass der Techniker 18 am falschen Ort 68 ist und deshalb einen falschen Code 34 gelesen hat, der nicht diesem Techniker#1 sondern z.B. einem anderen Wartungstechniker 18 oder einem der Fahrzeuge 20 (z.B. jenem der Zeile 56-2) zugeordnet ist, angezeigt wird, die dem Techniker #1 den richtigen Ort 68 mitteilt.

Nachdem die Wartung 26 der zu wartenden Komponente 70 abgeschlossen ist, kann der Techniker #1 den Code 34, der (optional) weiterhin an den Ort 68 projiziert wird, erneut mit dem Lesegerät 24 einlesen, um der Steuerung 12 das Ende der Wartung 26 mitzuteilen. Alternativ kann der Techniker 18 eine (optionale) Eingabeeinrichtung 82 (vgl. Fig. 5) des Lesegeräts 24 verwenden. Die Steuerung 12 kann basierend auf der zugehörigen Zeitangabe 72 (in Fig. 4: 10 min) und einer tatsächlich zwischen den beiden Lesungen vergangenen Zeit, die nachverfolgt wird, verifizieren, ob der Techniker #1 die Wartung tatsächlich durchgeführt hat. Auf diese Weise kann z.B. verhindert werden, dass der Techniker #1, den Code 34 einfach zwei Mal in kurzer zeitlicher Abfolge hintereinander liest, um lediglich vorzugeben, dass die Wartung 26 durchgeführt wurde, obwohl die Wartung 26 tatsächlich nicht stattgefunden hat. Die Steuerung 12 kann also durch eine Rückkopplung verifizieren, dass die Wartung 26 tatsächlich stattgefunden hat. Für den Techniker #1 ist nicht vorhersehbar, wie der spezielle Code 34, der für diese Wartung 26 individuell ist, aussieht, so dass der entsprechende Vorgang betrugssicher ist.

Die Projektion des zu einem der Aufträge 64 gehörenden, ortsspezifischen Codes 34 könnte auch zufällig erfolgen. Dies bedeutet, dass der Techniker 18 nicht bei allen zu wartenden Komponenten 70 den zugehörigen Code 34 eingeblendet bekommen wird. In diesem Fall wird dem Techniker 18 der entsprechende Wartungsauftrag (auch) über ein anderes Medium mitgeteilt, z.B. über eine visuelle Anzeige (Koordinate, Komponententyp, etc.) auf der Anzeigeeinrichtung 80 des Lesegeräts. Der Techniker 18 kann sich also in diesem Fall nie sicher sein, wann und wo eine (automatisierte) Bestätigung der korrekten Durchführung der Wartung 26 durch die Steuerung 12 angefordert werden wird. Ein Systembetreiber kann sich aber sicher sein, dass die Wartung 26 korrekt durchgeführt wurde, weil der Techniker 18 die Steuerung 12 nicht überlisten kann, indem der Techniker 18 z.B. vorab ausgedruckte Komponenten-Kennungen 78 einliest, ohne die entsprechende Komponente 70 auch tatsächlich inspiziert zu haben.

Die oben im Zusammenhang der Wartung 26 beschriebene Vorgehensweise lässt sich aber auch analog auf eine Überprüfung der Materialflusssteuerung 30 übertragen.

Der Fall einer Überprüfung der Materialflusssteuerung 30 wird exemplarisch anhand der zweiten Zeile 56-2 der Datenstruktur 55 der Fig. 4 beschrieben werden. Die zweite Zeile 56-2 beschreibt den Auftrag #2, der ein Materialfluss-Tracking in der zweiten Spalte 58-2 als durchzuführende Aktion definiert. Der Auftrag #2 ist mit einem Fahrzeug 20 verknüpft, das als AGV ("autonomous guided vehicle") #3 bezeichnet ist. Das AGV #3 sollte gemäß dem geplanten Materialfluss um 14:35 Uhr an einer Kreuzung #2 des Fördersystems 52 sein. Die Steuerung erzeugt einen entsprechenden Code #2, der für eine gewisse Zeitdauer bei der Koordinate bzw. an dem Ort 68 auf den Boden projiziert wird, die bzw. der der Kreuzung #2 entspricht. Wenn das AGV #3, wie geplant, um 14:35 die Kreuzung #2 passiert, kann das fahrzeugintegrierte Lesegerät 24 den auf die Kreuzung #2 projizierten Code #2 lesen und zusammen mit der Kennung 78 des AGV #3 und einem entsprechenden Zeitstempel an die Steuerung 12 zur weiteren Auswertung, d.h. Überprüfung, senden. Die Steuerung 12 kann basierend auf dem gesendeten Signal überprüfen, ob tatsächlich das AGV #3 um 14:35 Uhr die Kreuzung passiert hat, und ggf. korrigierend eingreifen. Eine mögliche Korrektur ist, dass der geplante Materialfluss an die tatsächlichen Gegebenheiten (AGV #3 hat die Kreuzung #2 z.B. früher oder später passiert) zeitnah angepasst wird. Eine andere mögliche Korrektur ist, dass das AGV #3 verzögert oder beschleunigt wird, um den nächsten Wegpunkt seiner Route rechtzeitig, d.h. zur geplanten Zeit, zu erreichen.

Auch lässt sich die oben beschriebene Vorgehensweise analog auf die Kommissionierführung 32 übertragen, was nachfolgend anhand der dritten Zeile 56-3 der Datenstruktur 55 der Fig. 4 exemplarisch beschrieben werden wird.

Gemäß dem Auftrag #3 soll die Kommissionierperson #2, die einen Kommissionierauftrag #8 bearbeitet, Artikel aus einem Regalfach #5 entnehmen. Ein entsprechender ortsspezifischer Code #3 wird an die entsprechende Koordinate bzw. den Ort 68 des Regalfachs #5 projiziert. In diesem Fall gibt es keine Zeitangabe 72, weil nicht vorab klar ist, wann die Kommissionierperson #2 die Entnahme am Regalfach #5 durchführen wird. Sobald die Kommissionierperson #2 das Regalfach #5 aufgrund der optischen Führung durch den dort projizierten Code #3 erreicht hat, scannt sie den Code #3. Das entsprechende Signal wird zusammen mit der entsprechenden Lesegerät-Kennung 78 und/oder der entsprechenden Kommissionierperson-Kennung an die Steuerung 12 gesendet. Die Steuerung 12 wertet dieses Signal aus und überprüft basierend auf den aus der Auswertung resultierenden Daten, ob der Kommissionierauftrag #8 korrekt abgearbeitet wird. Hat die Kommissionierperson #2 einen falschen Code 34 gescannt, der zu einem anderen Fach bzw. zu einem anderen Kommissionierauftrag gehört, kann die Steuerung 12 auf die oben beschriebene Weise korrigierend eingreifen.

Somit wurden verschiedene Anwendungen beschrieben, die auf der Datenstruktur 55 aufbauen, die exemplarisch in der Fig. 5 beschrieben ist. Es versteht sich, dass die Datenstruktur 55 nicht zwingend tabellarisch aufgebaut sein muss. Die Datenstruktur 56 kann auch in einer relationalen Datenbank hinterlegt sein.

Die Datenstruktur 55 ermöglicht es der Steuerung 12 aber, verschiedene Aktionen, die im System 10 von Menschen oder Maschinen durchzuführen sind, zu verifizieren, um Fehler zu vermeiden und eine korrekte Durchführung einer geplanten Aktion sicherzustellen.

### BEZUGSZEICHENLISTE:

- 10: (Intralogistik-)System
- 12: Steuerung
- 14: Projektor
- 16: (System-)Entität, beweglich
- 18: (Wartungs-)Techniker
- 20: (Transport-)Fahrzeug
- 22: Kommissionierperson
- 24: Lesegerät
- 26: Wartung
- 28: Kommissionierautomat
- 30: Materialfluss/Materialflusssteuerung
- 32: Kommissionierführung
- 34: Code
- 36: Kommunikationsnetzwerk
- 38: Regalanordnung
- 40: Lager
- 42: Wareneingang (WE)
- 44: Warenausgang (WA)
- 46: Regal
- 48: Arbeitsstation
- 50: Kommissionierplatz
- 52: Fördersystem
- 54: Auswerfer
- 55: Datenstruktur
- 56: Zeile
- 58: Spalte
- 60: Datenfeld
- 62: Datenfeldtyp
- 64: Auftragsnummer
- 66: Auftragstyp
- 68: Ort
- 70: (System-)Komponente
- 72: Zeit(angabe)
- 73: optoelektrischer Sensor
- 74: Sende/Empfangseinheit
- 76: (Daten-)Schnittstelle
- 78: Kennung
- 80: Anzeigeeinrichtung
- 81: Datenspeicher
- 82: Eingabeeinrichtung

## Patentansprüche

1. Intralogistiksystem (10) zum Überwachen einer vorbestimmten ortsspezifischen Aktion, die eindeutig mit einem Ort (68) aus einer Vielzahl von unterschiedlichen Orten (68) im Intralogistiksystem (10) verknüpft ist und die eindeutig mit einer beweglichen Systementität (16), die die Aktion durchführen soll, verknüpft ist, wobei das Intralogistiksystem (10) aufweist:
eine Steuerung (12), die einen Auftrag (64), der eindeutig mit der Aktion verknüpft ist, an die bewegliche Systementität (16) kommuniziert und die eingerichtet ist für:
eine Wartung (26) einer Systemkomponente (70) aus einer Vielzahl von Systemkomponenten (70); und/oder
ein Tracking einer Materialflusssteuerung (30);
ein Lesegerät (24), das die bewegliche Systementität (16) mit sich führt und das für einen Datenaustausch mit der Steuerung (12) verbunden ist; und
einen Projektor (14), der zum Projizieren von ortsspezifischen Codes (34), auf Veranlassung durch die Steuerung (12), an mehrere der Orte (68) innerhalb des Intralogistiksystems (10) eingerichtet ist;
**dadurch gekennzeichnet, dass**
die Steuerung (12) ferner eingerichtet ist, eine Durchführung der Aktion basierend auf dem Auftrag (64) und einem empfangenen Bestätigungssignal zu verifizieren, das von dem Lesegerät (24) erzeugt und an die Steuerung (12) gesendet wird, sobald das Lesegerät (24) einen der ortspezifisch projizierten Codes (34) gelesen hat.

2. Intralogistiksystem (10) nach Anspruch 1, **dadurch gekennzeichnet, dass** die Steuerung (12) eingerichtet ist, immer nur einen der Codes (34) zur gleichen Zeit zu projizieren.

3. Intralogistiksystem (10) nach Anspruch 1, **dadurch gekennzeichnet, dass** die Steuerung (12) eingerichtet ist, mehrere der Codes (34) gleichzeitig an die entsprechenden Orte (68) zu projizieren.

4. Intralogistiksystem (10) nach einem der Ansprüche 1 bis 3, **dadurch gekennzeichnet, dass** das Bestätigungssignal ferner aufweist:
eine komponentenspezifische Kennung (78);
eine entitätenspezifische Kennung (78); und/oder
eine lesegerätspezifische Kennung (78).

5. Intralogistiksystem (10) nach einem der Ansprüche 1 bis 4, **dadurch gekennzeichnet, dass** der eine Code (34) an den Ort (68) projiziert wird, der mit der zugehörigen Aktion verknüpft ist.

6. Intralogistiksystem (10) nach Anspruch 5, **dadurch gekennzeichnet, dass** der Projektor (14) hochauflösend ist, um den einen Code (34) aus einer Entfernung von mindestens 3m, 4m oder 5m oder aus einer Entfernung von mehr als 5m an den einen Ort (68) zu projizieren.

7. Intralogistiksystem (10) nach einem der Ansprüche 1 bis 6, **dadurch gekennzeichnet, dass** das Intralogistiksystem eine Datenstruktur (55) aufweist, die eine oder mehrere der Aktionen definiert und die für jede der definierten Aktionen einen einzigen der ortsspezifischen Codes (34) umfasst, der eine Koordinate (68) im Intralogistiksystem (10) eindeutig beschreibt, an welche der eine Code (34) durch den Projektor (14) zu projizieren ist.

8. Intralogistiksystem (10) nach Anspruch 7, **dadurch gekennzeichnet, dass** die Datenstruktur (55) für jede der Aktionen ferner einen Auftragstypen (66), eine der Entitäten (16), eine Systemkomponente (70) und/ oder eine Zeitangabe (72) umfasst.

9. Intralogistiksystem (10) nach einem der Ansprüche 1 bis 8, **dadurch gekennzeichnet, dass** die Codes (34), vorzugsweise ausschließlich, maschinell durch das Lesegerät (24) lesbar sind und durch die Steuerung (12) ausgewertet werden.

10. Intralogistiksystem (10) nach Anspruch 9, **dadurch gekennzeichnet, dass** die Codes (34) eindimensional oder zweidimensional ausgestaltet sind, um eine Ortskoordinate eindeutig in Form eines Musters abzubilden.

11. Intralogistiksystem (10) nach einem der Ansprüche 1 bis 10, **dadurch gekennzeichnet, dass** die Verifikation im Fall der Wartung (26) erfolgt, indem:
ferner, durch das Lesegerät (24), eine Systemkomponenten-Kennung (78) gelesen und gesendet und, durch die Steuerung (12), geprüft wird; und/oder
durch die Steuerung (12) geprüft wird, ob die Systemkomponente (70), die ebenfalls mit dem Auftrag (64) verknüpft ist, während einer vorbestimmten Zeitdauer offline geht, nachdem der eine Code (34) gelesen wurde.

12. Intralogistiksystem (10) nach einem der Ansprüche 1 bis 11, **dadurch gekennzeichnet, dass** die Verifikation im Fall der Materialflusssteuerung (30) erfolgt, indem
das Lesegerät (24), das an einem Fahrzeug (20), das die bewegliche Entität (16) ist, angebracht ist, den einen Code (34) an einem Wegpunkt liest, den das Fahrzeug (20) gemäß einer vorab geplanten Materialflusssteuerung (30) passieren muss und auf den der eine Code (34) projiziert wird,
das Bestätigungssignal ferner eine fahrzeugspezifische Kennung (78), und vorzugsweise einen Zeitstempel entsprechend der Lesung des einen Codes (34), aufweist, und
die Steuerung (12) die vorab geplante Materialflusssteuerung (30) durch einen Vergleich gegen Daten prüft, die aus einer Auswertung des Bestätigungssignals resultieren.

13. Intralogistiksystem (10) nach einem der Ansprüche 1 bis 12, **dadurch gekennzeichnet, dass** die Verifikation durch die Steuerung (12) eine Überprüfung umfasst, dass der empfangene gelesene Code (34) mit dem Code (34) übereinstimmt, der der entsprechenden Aktion zugeordnet ist; und
die Steuerung (12), wenn die Codes (34) übereinstimmen, ein weiteres Bestätigungssignal an die entsprechende bewegliche Systementität (16) ausgibt und veranlasst, dass diese Systementität (16) ihre aktuelle Aktion fortsetzt,
oder
die Steuerung (12), wenn die Codes (34) nicht übereinstimmen, ein Korrektursignal an die entsprechende bewegliche Systementität (16) ausgibt und veranlasst, dass diese Systementität (16) anstatt ihrer aktuellen Aktion die vorbestimmte Aktion durchführt.

14. Intralogistiksystem (10) nach einem der Ansprüche 1 bis 13, **dadurch gekennzeichnet, dass** die Steuerung eingerichtet ist für:
die Wartung (26) der Systemkomponente (70) aus der Vielzahl von Systemkomponenten (70);
das Tracking der Materialflusssteuerung (30); und/oder
eine Durchführung einer Kommissionierführung (32).

## Claims

1. An intralogistics system (10) for monitoring a predetermined location-specific action being uniquely associated with a location (68) of a plurality of different locations (68) in the intralogistics system (10) and being uniquely associated with a movable system entity (16), which is to perform the action, wherein the intralogistics system (10) comprises:
a control (12) communicating an order (64), which is uniquely associated with the action, to the movable system entity (16) and being configured for:
maintenance (26) of one system component (70) of a plurality of system components (70); and/or
tracking of material-flow control (30);
a reading device (24), which the movable system entity (16) carries along and is connected to the control (12) for data exchange; and
a projector (14) configured to project location-specific codes (34), on command from the control (12), onto several ones of the locations (68) within the intralogistics system (10);
**characterized in that** the control (12) is configured further to verify performance of the action based on the order (64) and received confirmation signal, which is generated by the reading device (24) and transmitted to the control (12) as soon as the reading device (24) has read one of the location-specifically projected codes (34).

2. The intralogistics system (10) of claim 1, **characterized in that** the control (12) is configured to project one of the codes (34) at a time only.

3. The intralogistics system (10) of claim 1, **characterized in that** the control (12) is configured to project several ones of the codes (34) at the same time onto the corresponding locations (68).

4. The intralogistics system (10) of any of claims 1 to 3, **characterized in that** the confirmation signal further comprises:
a component-specific identifier (78);
an entity-specific identifier (78); and/or
a reading-device-specific identifier (78).

5. The intralogistics system (10) of any of claims 1 to 4, **characterized in that** the one code (34) is projected onto the location (68) being associated with the associated action.

6. The intralogistics system (10) of claim 5, **characterized in that** the projector (14) is high resolution to project the one code (34) from a distance of at least 3 m, 4 m or 5 m, or from a distance of more than 5 m, onto the location (68).

7. The intralogistics system (10) of any of claims 1 to 6, **characterized in that** a data structure (55) defining one or more of the actions and including, for each of the defined actions, a single one of the location-specific codes (34) describing uniquely a coordinate (68) in the intralogistics system (10), onto which the one code (34) is to be projected by the projector (14).

8. The intralogistics system (10) of claim 7, **characterized in that** the data structure (55) includes further, for each of the actions, an order type (66), one of the entities (16), a system component (70), and/or a time specification (72).

9. The intralogistics system (10) of any of claims 1 to 8, **characterized in that** the codes (34) are, preferably exclusively, machine-readable by the reading device (24) and are evaluated by the control (12).

10. The intralogistics system (10) of claim 9, **characterized in that** the codes (34) are one-dimensional or two-dimensional in order to uniquely represent a location coordinate in terms of a pattern.

11. The intralogistics system (10) of any of claims 1 to 10, **characterized in that** the verification in case of the maintenance (26) is performed by:
reading further and transmitting, by the reading device (24), and checking, by the control (12), a system-component identifier (78); and/or
checking by the control (12) whether the system component (70), which is also associated with the order (64), goes offline during a predetermined period of time after the one code (34) was read.

12. The intralogistics system (10) of any of claims 1 to 11, **characterized in that** the verification in case of the material-flow control (30) is performed by
the reading device (24) attached to a vehicle (20), which is the movable entity (16), reading the one code (34) at a waypoint, which has to be passed by the vehicle (20) in accordance with a pre-planned material-flow control (30) and onto which the one code (34) is projected,
the confirmation signal further comprising a vehicle-specific identifier (78), and preferably a timestamp corresponding to the reading of the one code (34), and
the control (12) checking the pre-planned material-flow control (30) by comparison against data resulting from an evaluation of the confirmation signal.

13. The intralogistics system (10) of any of claims 1 to 12, **characterized in that** the verification by the control (12) includes a check that the received code (34) read matches with the code (34) being associated with the corresponding action; and
the control (12), when the codes (34) match, outputs a further confirmation signal to the corresponding movable system entity (16) and causes this system entity (16) to continue its current action, or
the control (12), when the codes (34) do not match, outputs a correction signal to the corresponding movable system entity (16) and causes this system entity (16) to perform the predetermined action instead of its current action.

14. The intralogistics system (10) of any of claims 1 to 13, **characterized in that** the control is configured for:
the maintenance (26) of the system component (70) of the plurality of system components (70);
the tracking of the material-flow control (30); and/or
performance of a picking guidance (32).

## Revendications

1. Système intralogistique (10) permettant de surveiller une action spécifique à un emplacement prédéterminée qui est associée de manière unique à un emplacement (68) parmi une pluralité d'emplacements (68) différents dans le système intralogistique (10) et qui est associée de manière unique à une entité de système mobile (16) qui doit exécuter l'action, dans lequel le système intralogistique (10) présente :
une commande (12) qui communique à l'entité de système mobile (16) un ordre (64) associé de manière unique à l'action et qui est configurée pour :
une maintenance (26) d'un composant de système (70) parmi une pluralité de composants de système (70) ; et/ou
un suivi d'une commande de flux de matériaux (30) ;
un appareil de lecture (24) qui transporte l'entité de système mobile (16) avec lui et qui est connecté à la commande (12) pour un échange de données ; et
un projecteur (14) qui est configuré pour projeter des codes (34) spécifiques à un emplacement, à la demande de la commande (12), à plusieurs emplacements (68) à l'intérieur du système intralogistique (10) ;
**caractérisé en ce que**
la commande (12) est en outre configurée pour vérifier une exécution de l'action sur la base de l'ordre (64) et d'un signal de confirmation reçu qui est généré par l'appareil de lecture (24) et envoyé à la commande (12) dès que l'appareil de lecture (24) a lu l'un des codes (34) projetés de manière spécifique à l'emplacement.

2. Système intralogistique (10) selon la revendication 1, **caractérisé en ce que** la commande (12) est configurée pour projeter un seul des codes (34) à la fois.

3. Système intralogistique (10) selon la revendication 1,
**caractérisé en ce que** la commande (12) est configurée pour projeter simultanément plusieurs codes (34) aux emplacements (68) correspondants.

4. Système intralogistique (10) selon l'une des revendications 1 à 3, **caractérisé en ce que** le signal de confirmation présente en outre :
un identifiant (78) spécifique au composant ;
un identifiant (78) spécifique à l'entité ; et/ou
un identifiant (78) spécifique à l'appareil de lecture.

5. Système intralogistique (10) selon l'une des revendications 1 à 4, **caractérisé en ce que** ledit code (34) est projeté à l'emplacement (68) associé à l'action correspondante.

6. Système intralogistique (10) selon la revendication 5,
**caractérisé en ce que** le projecteur (14) est à haute résolution pour projeter ledit code (34) audit emplacement (68) à une distance d'au moins 3 m, 4 m ou 5 m ou à une distance supérieure à 5 m.

7. Système intralogistique (10) selon l'une des revendications 1 à 6, **caractérisé en ce que** le système intralogistique présente une structure de données (55) qui définit une ou plusieurs actions et qui comprend, pour chacune des actions définies, un seul des codes (34) spécifiques aux emplacements qui décrit de manière unique une coordonnée (68) dans le système intralogistique (10) à laquelle ledit code (34) doit être projeté par le projecteur (14).

8. Système intralogistique (10) selon la revendication 7,
**caractérisé en ce que** la structure de données (55) comprend en outre, pour chacune des actions, un type d'ordre (66), l'une des entités (16), un composant de système (70) et/ou une indication de temps (72).

9. Système intralogistique (10) selon l'une des revendications 1 à 8, **caractérisé en ce que** les codes (34) peuvent être lus, de préférence exclusivement, par machine au moyen de l'appareil de lecture (24) et sont évalués par la commande (12).

10. Système intralogistique (10) selon la revendication 9,
**caractérisé en ce que** les codes (34) sont conçus sous forme unidimensionnelle ou bidimensionnelle afin de représenter une coordonnée d'emplacement de manière unique sous la forme d'un modèle.

11. Système intralogistique (10) selon l'une des revendications 1 à 10, **caractérisé en ce que** la vérification dans le cas de la maintenance (26) est effectuée par le fait que :
en outre, un identifiant de composant de système (78) est lu par l'appareil de lecture (24) et envoyé et est vérifié par la commande (12) ; et/ou
la commande (12) vérifie si le composant de système (70) qui est également associé à l'ordre (64) se met hors ligne pendant une période de temps prédéterminée après que ledit code (34) a été lu.

12. Système intralogistique (10) selon l'une des revendications 1 à 11, **caractérisé en ce que** la vérification dans le cas de la commande de flux de matériaux (30) est effectuée par le fait que
l'appareil de lecture (24), lequel est monté sur un véhicule (20) qui est l'entité mobile (16), lit le code (34) au niveau d'un point de trajet que le véhicule (20) doit franchir conformément à une commande de flux de matériaux (30) planifiée au préalable et auquel le code (34) est projeté,
le signal de confirmation présente en outre un identifiant (78) spécifique au véhicule, et de préférence un horodatage correspondant à la lecture dudit code (34), et
la commande (12) vérifie la commande de flux de matériaux (30) planifiée au préalable par une comparaison par rapport à des données résultant d'une évaluation du signal de confirmation.

13. Système intralogistique (10) selon l'une des revendications 1 à 12, **caractérisé en ce que** la vérification par la commande (12) comprend une vérification du fait que le code (34) lu et reçu correspond au code (34) attribué à l'action correspondante ; et
si les codes (34) concordent, la commande (12) émet un autre signal de confirmation à l'entité de système mobile (16) correspondante et s'assure que ladite entité de système (16) poursuit son action actuelle, ou
si les codes (34) ne concordent pas, la commande (12) émet un signal de correction à l'entité de système mobile (16) correspondante et s'assure que ladite entité de système (16) exécute l'action prédéterminée au lieu de son action actuelle.

14. Système intralogistique (10) selon l'une des revendications 1 à 13, **caractérisé en ce que** la commande est configurée pour :
la maintenance (26) du composant de système (70) parmi la pluralité de composants de système (70) ;
le suivi de la commande de flux de matériaux (30) ; et/ou
une exécution d'un guide de préparation de commande (32).
